## Europäisches Patentamt

## European Patent Office

## Office européen des brevets

(19)

(11) Publication number: **0 287 541**
**A2**

---

(12) # EUROPEAN PATENT APPLICATION

(21) Application number: **88850124.4**

(22) Date of filing: **12.04.88**

(51) Int. Cl.⁴: **B 60 S 3/06**

(30) Priority: **13.04.87 DK 1910/87**

(43) Date of publication of application:
**19.10.88 Bulletin 88/42**

(84) Designated Contracting States:
**AT BE CH DE ES FR GB GR IT LI LU NL SE**

(71) Applicant: **PAVA TEKNIK ApS**
**Mosevangen 8**
**DK-9230 Svenstrup (DK)**

(72) Inventor: **Rasmussen, Gorm**
**Hylderupvej 34**
**DK-4200 Slagelse (DK)**

(74) Representative: **Bjellman, Lennart Olov Henrik et al**
**DR. LUDWIG BRANN PATENTBYRA AB Drottninggatan 7**
**Box 1344**
**S-751 43 Uppsala (SE)**

---

(54) **Polishing machine for vehicles.**

(57) A polishing machine for automatic, mechanical polishing of vehicles to which wax has first been applied comprises a supporting frame (3,4,5) for two vertical rotatable polishing brushes (1) and at least one horizontal polishing brush (2). The vertical polishing brushes (1) suspend from each its trolley (20) which may travel on transverse rails (9) operated by hydraulic cylinders (15). The entire polishing machine is designed as a rail vehicle moving on rails (7).

The vertical brushes (1) may thereby be moved parallelly to as well as perpendicularly to the relative direction of travel (24) whereby both the sides and the ends of the vehicle are polished. The upwardly facing surfaces of the vehicle are polished with the top brush (2).

Fig. 1

EP 0 287 541 A2

Bundesdruckerei Berlin

**Description**

**POLISHING MACHINE FOR VEHICLES**

The invention relates to a polishing machine of the kind described in the introduction to claim 1.

A substantial number of different tools are known for use in polishing of lacquered metal surfaces including vehicles such as passenger cars, buses and railway carriages. Usual wax polishing is done because the vehicle gets a more attractive appearance, is much easier to keep clean and easier to clean and because a hard polished lacquered surface is a fairly effective protective means against rust and corrosion. It has moreover turned out that graffitti writings and the like are much easier to remove from effectively wax polished surfaces than from non-polished surfaces because the graffitti are on the wax layer and cannot penetrate the hard surface of the wax.

Under normal circumstances a polishing of vehicles requires a substantial manual effort because most polishing tools are manually operated. Thereby the polishing becomes costly due to the great consumption of hours. It may for example easily take 2-4 hours to polish an ordinary passenger car with the usual polishing wax.

Therefore attempts have also been made to polish at least passenger cars in an automatic polishing machine designed like an ordinary washing machine for passenger cars so that the polishing work may be completed in 15-20 minutes and mechanically. The polishing agent, for example wax, is first applied whereafter a number of big drum-shaped polishing brushes polish the car. However, the known machines are all encumbered with the problem of being capable of polishing all lacquered surfaces equally carefully and it has particularly been difficult to ensure mechanical polishing of the front end and/or rear end of the vehicle.

It is the object of the invention to provide a polishing machine of the kind described in the introduction to claim 1 which without problems may polish all the lacquered surfaces carefully and fully automatically and also the front and rear ends of the vehicle. Moreover, the polishing machine is to be designed as a comparatively simple and solid mechanical structure and such that as few polishing brushes as possible are required.

This is achieved by designing the polishing machine according to the invention as disclosed in the characterising part of claim 1. This will permit all sides of the vehicle, i.e. both common passenger cars, buses and delivery vans and railway carriages to be polished on the sides, i.e. on the front end, the rear end and along the sides. For cars and buses the machine according to the invention is made self-propelled so that the vehicle to be polished is placed in a stationary position in front of the machine before starting same. In case the machine according to the invention is used in connection with a socalled washing tunnel where the vehicle is pulled through the tunnel, the polishing machine will be stationary. In case the polishing machine according to the invention is used for polishing carriage sides of railway carriages, it will generally also be placed in a stationary position across and by the track so that railway carriages to be polished are pulled or driven by their own power through the polishing machine.

The usual procedure by polishing a vehicle such as a passenger car by using the polishing machine according to the invention will be that the car is first washed and dried carefully whereafter polishing wax is applied to the lacquered surfaces of the clean car, for example manually by means of a spray gun thereby avoiding getting wax on mirrors, windows etc. When the wax is completely dry, the car is driven into the polishing machine and same is started and 15-20 minutes later the lacquered surfaces will have a higher mirror finish with a very hard wax surface.

The polishing machine according to claim 1 is arranged in such a manner that one of the vehicle ends is first polished, then the vehicle sides and finally the other vehicle end whereafter the direction of rotation of the brushes is perhaps turned and the vehicle polished one more time but in reverse order and at the same time while the polishing machine reverts to its starting position and is ready to polish the next vehicle. The polishing the second time may often take place more quickly than the first time since after the first polishing the wax is already surface hard and shining. Particularly if the direction of rotation of the polishing brushes is reversed, there is ensured a thorough polishing of all surfaces.

The particular manner according to claim 1 in which the vertical polishing brushes are moved contributes to polishing the front as well as the rear end thoroughly and all over. The particular arrangement of the polishing machine moreover means that it is adequate to have two polishing brushes which is a great saving relative to the known machines using a greater number of polishing brushes. In this connection it should be remembered that the brushes are worn and require replacement and must be regularly cleaned.

The polishing machine according to the invention is preferably designed as disclosed in the characterising part of claim 2 thereby providing a reliable polishing of particularly the entire front end and the entire rear end of the vehicle. By the particular design it is achieved that one of the brushes cannot be in the way of the other brush or vice versa. The two brushes do not at all have to be able to reach each other, their particular pattern of movement ensuring that any surface is nevertheless polished on the front end and rear end of the vehicle. It is not either necessary to fix the direction of rotation of one of the brushes relative to the other one when they do not touch, and therefore it is possible to fix the direction of rotation exclusively to obtain a perfect polishing result. Furthermore, it is possible to make allowance for the structure of the vehicle when fixing the direction of rotation.

By designing the polishing machine according to the invention as disclosed in the characterising part of claim 3, there is obtained a simple structure and design of the transverse movement of the polishing brushes. At the same time the tipping movement may be used for controlling the extent of the pressure of the brushes against the vehicle thereby obtaining an automatic control of the brushes independently of the shape of the vehicle.

If the polishing machine according to the invention is to be self-propelled, it is preferably designed as disclosed in the characterising part of claim 4 in such a manner that it travels on a fixed track in quite the same manner as fully automatic car washing machines.

If horizontal surfaces on the vehicle are to be polished, for example the top surface, the bonnet and the luggage compartment lid of a passenger car, the polishing machine according to the invention is preferably designed as disclosed in the characterising part of claim 5. The rotating top brush may be used for polishing upwardly facing surfaces on the car at the same time while the previously mentioned vertical brushes polish the car side and the front and rear ends of the vehicle. Also in this case the automatic adjustment of the pressure of the brush is made by sensing the extent of the pressure of the brush against the vehicle.

The polishing machine according to the invention is preferably designed as disclosed in the characterising part of claim 6. This will provide a polishing in such a manner that the wax surface is hardened without damage being done to the vehicle. The polishing is first initiated when the wax is quite dry so that the polishing brushes are not fouled with wax. The use of the special brushes means that they can be used for polishing a very large number of vehicles before it is necessary to clean them of wax.

Finally, the polishing machine according to the invention may be designed as disclosed in the characterising part of claim 6. In this manner it possible in a simple way to replace destroyed or worn parts of a polishing brush without having to replace or remove the entire brush from the polishing machine.

The invention will now be further described in the following with reference to the drawing wherein

Fig. 1 shows the machine according to the invention adapted to polish cars,

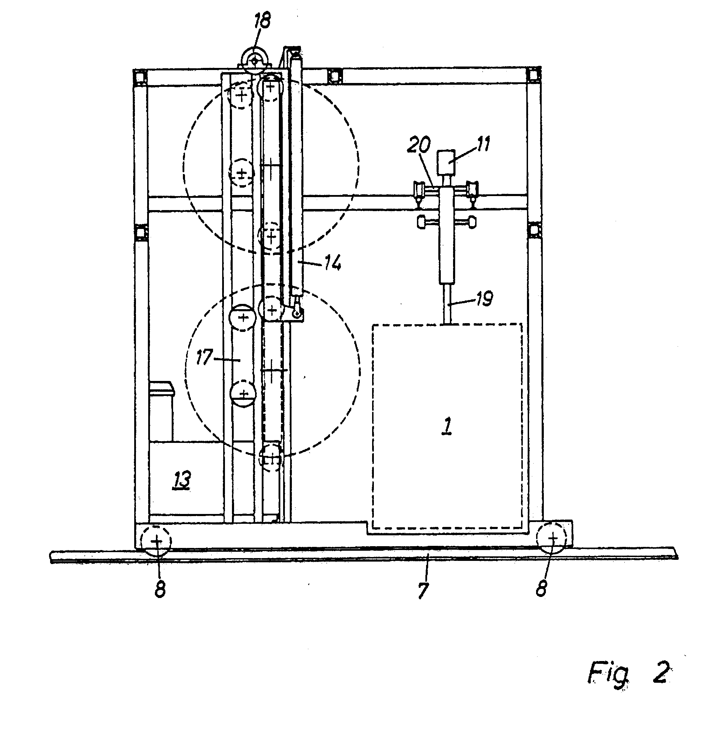

Fig. 2 shows the machine in Fig. 1 but as an inside sectional view in the direction II-II, and

Fig. 3 shows a top view of the machine in Fig. 1, and

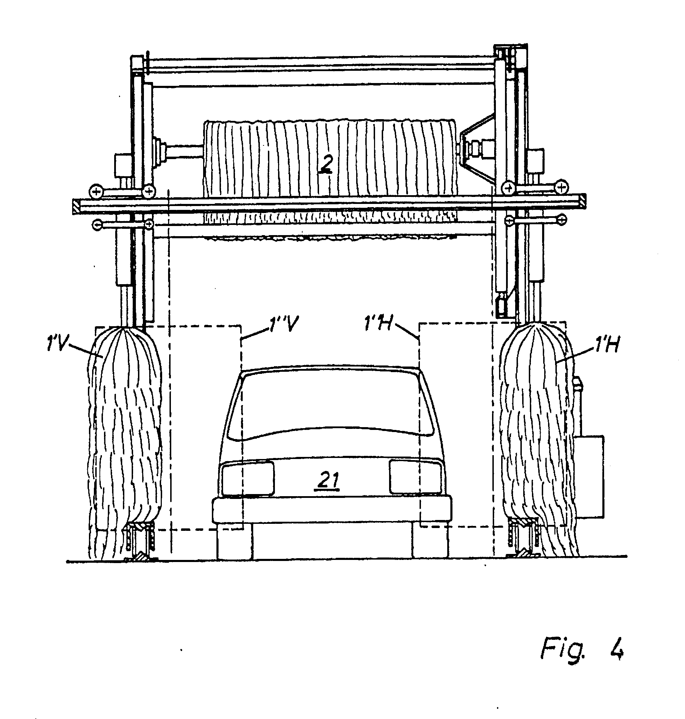

Fig. 4 shows a front view of the machine in Fig. 1 and showing the outline of a car,

Fig. 5 shows at a larger scale the suspension of a polishing brush,

Fig. 6 shows the same as Fig. 5 but during the polishing of the front end or the rear end of the vehicle,

Fig. 7 shows an axial section of a polishing brush, and

Fig. 8 shows part of the polishing brush.

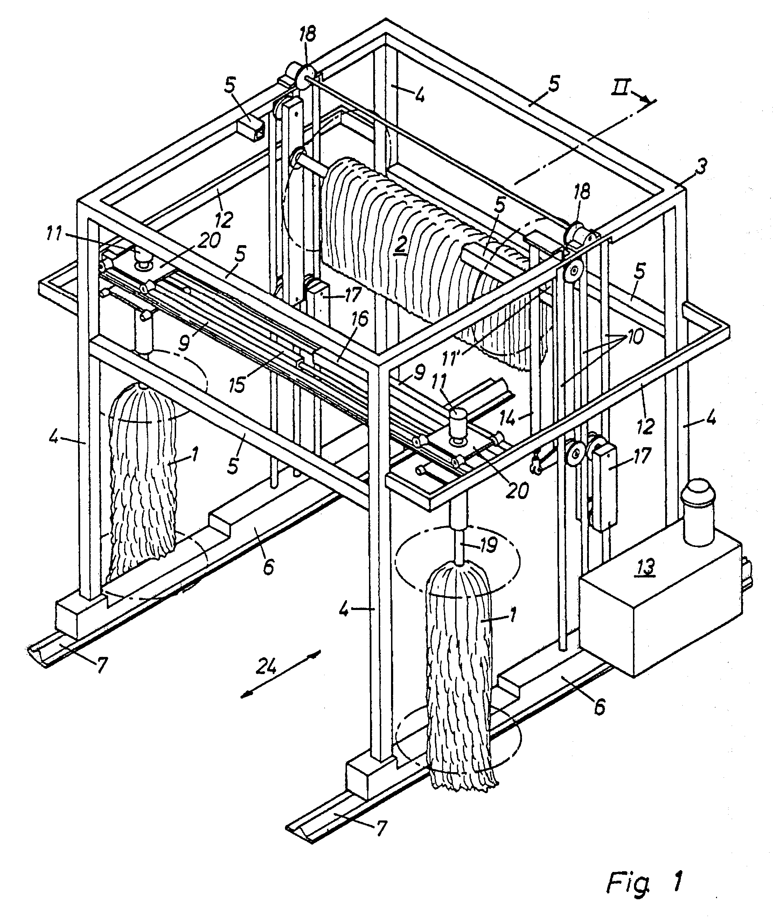

The polishing machine is built up by a framework 3,4,5 secured at either side to a bottom side member 6 with wheels 8 travelling on rails 7. The thus movable structure may travel in longitudinal direction as shown by the double arrow 24 in Fig. 1.

All polishing brushes and all auxiliary means therefor are mounted on the framework.

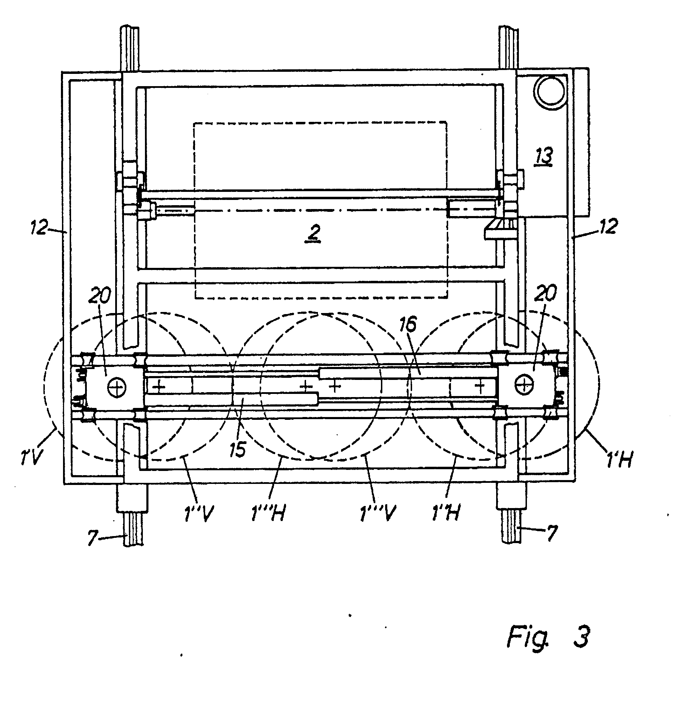

Between the vertical posts 4 there are at either side mounted two girders 12, the distance between them being greater than the width of the frame structure, see Fig. 1. Between them there are mounted horizontal guides 9 for example in the form of pipes on which a trolley 20 at either side may travel. Each trolley supports a motor 11 and an underslung brush 1 in a drive shaft 19. The trolleys 20 may travel in transverse direction on the pipes 9 pulled by each its working cylinder 15, the opposite end of which is secured to the girder 12. Control of the pattern of movement of the trolleys 20 will be explained later in connection with Fig. 3 of the drawing.

A top brush 2 of the same design as the brushes 1 is arranged horizontally from side to side and suspends from a balancing mechanism 17, 18 which for example comprises chains, chain wheels and counterweights so that the weight of the brush 2 is balanced. Vertical adjustment of the brush 2 is possible by means of a working cylinder 14 and guide bars 10. A motor such as a hydraulic motor 11' pulls the horizontal brush 2.

To the structure 3,4,5,6 there is moreover secured a cabinet 13 containing a pressure oil pump with reservoir and electrical control means therefor and for the polishing machine in general. The polishing machine according to the invention need only be supplied with electric current through a flexible cable in that the required hydraulic pressure oil is supplied by the pressure oil pump. For the sake of clearness the drawing shows neither hydraulic pressure oil pipes nor electric wires. The drive motor 11 and 11' and the working cylinders 14 and 15 and the not shown drive motors for the rail wheels 8 are preferably all hydraulically operated but it is obvious to a person skilled in the art that instead it is possible to use electric or pneumatic drive means. All drive motors and the control thereof and the control of the polishing machine in general are of a generally known kind and designed by means of common sensing means such as position and pressure sensing means, all in connection with a common electric sequential control circuit. The controlling will therefore not be further explained but solely its operation and function in that the more specific details may be executed in a generally known manner.

The pattern of movement of the vertical polishing brushes 1 will now be further described and with reference to Fig. 3 of the drawing. The polishing brush 1 on the trolley 20 at the right side is designated $1_H$ and the polishing brush 1 on the trolley 20 at the left side is designated $1v$. $1_H'$ and $1v'$ designate the extreme positions of the polishing brushes which are also their starting positions. When they are to polish the car sides in longitudinal direction, the brushes 1 take by means of the cylinders 15 a position approximately corresponding to position $1_H''$ and $1v''$ dependent on the width of the car.

When the front or rear end of the car is to be polished, one of the brushes 1, for example the left brush, is pulled in to position $1_v$ by means of its hydraulic cylinder 15, and the brush $1_H$ is pulled by its cylinder 15 in to position $1_H''$. At the same time while the brushes 1 are rotated by each its drive motor 11, both cylinders 15 are activated in such a manner that both brushes are moved to the left when polishing the car end and until the brush $1_v$ reaches the position $1_v''$ and the brush $1_H''$ reaches the position $1_H$. Thereafter the direction of movement of both cylinders is reversed so that both brushes are moved to the right, and if desired the direction of rotation of the brush motors 11 is reversed. Both brushes 1 are thus moved synchronously but at a mutual distance, first to one side and then to the other side so that the car end is with certainty carefully polished.

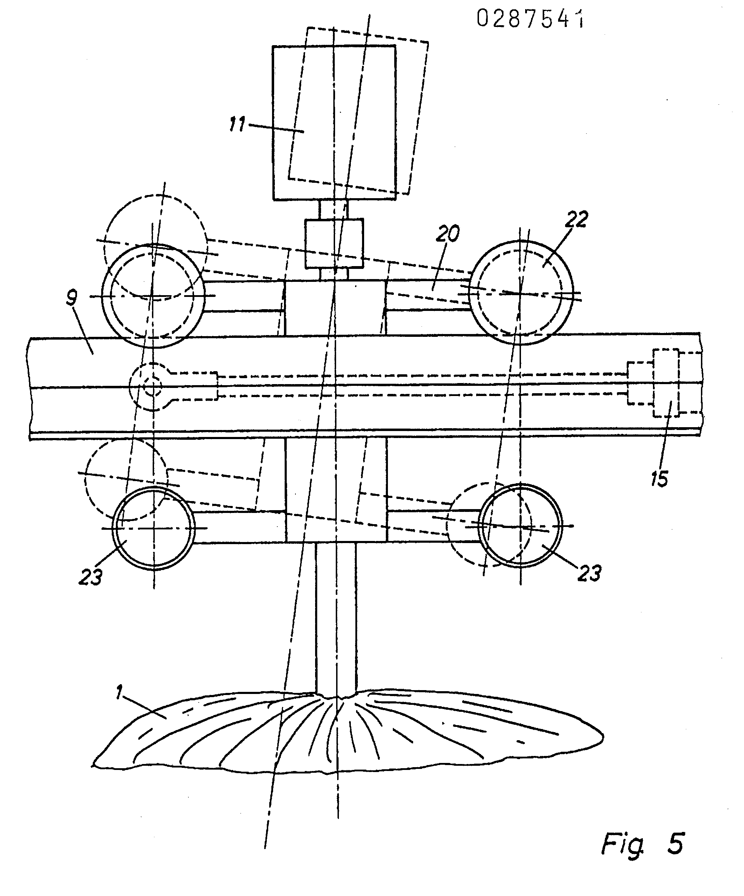

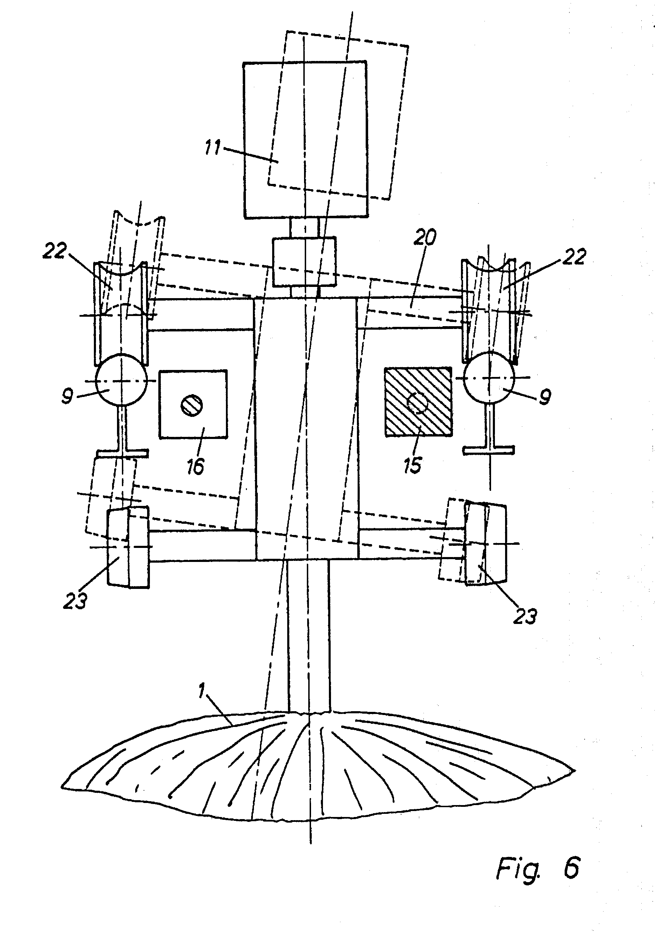

With reference to Figs. 5 and 6 of the drawing the operation of the vertical brushes following the outlines of the car during the polishing will now be explained. By means of the hydraulic cylinders 15 the trolleys 20 are pulled towards the centre, see Fig. 5, until the pressure of the brush 1 against the car side is so big that the trolley 20 tips and the trolley wheels 22 at one side are lifted off the rail 9 which is shown in a broken line. To prevent the trolley from overtipping there have been provided under the trolley 20 and under the rails 9 safety means 23 fixedly connected to the trolley 20. By using conventional sensing means it is possible to sense the extent of the tipping and use the sensing signal for controlling the pressure in the cylinders 15 so that the pressure of the brushes 1 against the car side is as desired. Fig. 6 shows the corresponding function but in connection with polishing of the front or rear end of the car.

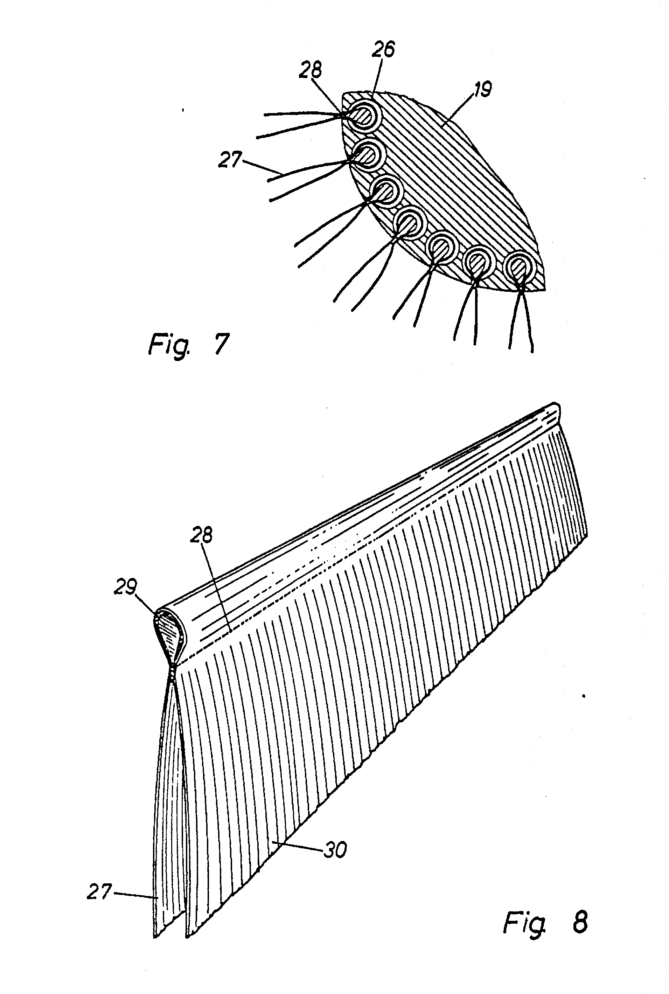

Figs. 7 and 8 show the particular design of the polishing brushes 1. The drive shaft 19 has longitudinal grooves 26 retaining polishing means or polishing rugs 27 which by cuts 30 in radial direction are split in strips. The polishing means 27 may be manufactured by folding and sewing together 28 felt or felt-like cloth to which a rubber tread 29 or the like may be secured so as to retain the polishing means 27 in the groove 26. The replacement of the polishing means 27 is executed by pulling out in axial direction and insertion of new polishing means. The polishing means are thus designed as radially arranged flat strips of polishing felt but can of course also be designed in a different manner. The felt rugs may be reinforced with reinforcing treads, for example of plastic, or can be a layer of several filt layers with inserted reinforcing layers.

The polishing machine shown in Fig. 1 operates in the following manner. The machine starts in a starting position which may for example be the position shown in Fig. 1. A waxed car is driven towards the portal opening 4,5 until a photo cell barrier is broken and a signal to stop is given. The car is stopped, the hand brake applied and the car is left with all doors and windows closed. The polishing machine is started and one of the brushes 1 is moved towards the centre, for example to position $1_v$ or $1_H$, see the explanation in connection with Fig. 3. At the same time the motors 11 rotating the brushes 1 are started and the entire polishing machine travels on the rails 7 towards the car until the centre one of the polishing brushes 1 is in pressure contact with the front end or rear end of the car according to the direction of the car, and the running of the polishing machine on the rails 7 is stopped and the car end is polished as mentioned in connection with Fig. 3. Then the brushes 1 are moved to positions corresponding to $1_H'$ and $1_v'$, see Fig. 3, and the polishing of the car sides is performed by moving the entire polishing machine over the car while both polishing brushes 1 are at the same time moved towards the car side and polish same. At the same time the top brush 2 is started and lowered until it contacts the car and while sensing the pressure of the brush 2 against the car it follows the outlines of the car in the same manner as for example a generally known rotating top washing brush is controlled.

When the brushes 1 have polished the car sides, the other end of the car is polished in the same manner as before. The brushes 1,2 are rotated at a speed of rotation of approx. 100-150 r.p.m. and the direction of rotation may be reversed during the polishing and by changing the direction of movement of the polishing machine.

## Claims

1. Polishing machine for automatic, mechanical polishing of vehicles to which a polishing agent such as wax has first been applied on the surfaces of the vehicle to be polished, characterised in that the machine comprises a supporting frame (3,4,5) for at least two vertical polishing brushes (1) which are power-driven and rotatable about a substantially vertical axis, said polishing brushes suspending from the supporting frame which is adapted to be moved relatively to the vehicle and where the frame has guide means (9) for the brushes (1) so that they may both be moved substantially parallel to and substantially perpendicular to the relative direction of travel (24).

2. Polishing machine according to claim 1, characterised in that the guide means are transverse rails (9) on which the polishing brushes (1) with their drive and support means (11,20) may travel synchronously in the same direction and perpendicularly to the direction of travel (24) when the front end or the rear end of a vehicle is to be polished.

3. Polishing machine according to claim 2, characterised in that the guide means comprise at least two parallel rails (9) supporting a trolley with wheels (22) for each polishing brush (1) said trolleys being operated by each its drive mechanism (15) and where each trolley has limiting means (23) so that it may make a limited tip when the polishing brush (1) suspended therefrom is pressed against the vehicle.

4. The polishing machine according to any one of claims 1-3, characterised in that the supporting frame (3,4,5) comprises a bottom side member (6) provided with a number of driving wheels (8) at either side and arranged in such a manner that the polishing machine as a unit may travel on longitudinal rails (7).

5. The polishing machine according to claim 4, characterised in that it further comprises at least one polishing brush (2) which is power-driven and rotatable about a substantially horizontal axis, said polishing brush suspending from vertical guide means (10) in the frame (3,4,5) and being vertically adjustable relative to the vehicle to be polished.

6. The polishing machine according to any one of claims 1-5, characterised in that the polishing brushes (1,2) consist of a large number of flat, oblong strips of felt or felt-like cloth (27) secured to a shaft (19) so that there is formed a substantially cylindrical brush.

7. The polishing machine according to claim 6, characterised in that the shafts (19) have longitudinally extending grooves (26) wherein felt rugs (27) are secured said rugs being radially slit (30).

0287541

Fig. 1

Fig. 2

0287541

Fig. 3

0287541

Fig. 4

0287541

Fig. 5

0287541

Fig. 6

0287541

Fig. 7

Fig. 8